Europäisches Patentamt

European Patent Office

Office européen des brevets

(11) Publication number: **0 382 196**
**A2**

# EUROPEAN PATENT APPLICATION

(21) Application number: 90102426.5

(51) Int. Cl.⁵: **G01N 17/02**

(22) Date of filing: 07.02.90

(30) Priority: 08.02.89 IT 1935189

(43) Date of publication of application:
16.08.90 Bulletin 90/33

(84) Designated Contracting States:
AT BE CH DE DK ES FR GB GR IT LI LU NL SE

(71) Applicant: ORONZIO DE NORA S.A.
c/o Coge-Sidam S.A. Via Canevascini 26
Lugano(CH)

(72) Inventor: Bianchi, Giuseppe
P.za Libia, 1
I-20135 Milan(IT)
Inventor: Mussinelli, Gian Luigi
Via E. Zardo
I-22074 Lomazzo (CO)(IT)
Inventor: Tettamanti, Michele
Via Varesina, 126
I-22100 Milano(IT)

(74) Representative: Kinzebach, Werner, Dr. et al
Patentanwälte Reitstötter, Kinzebach und
Partner Sternwartstrasse 4 Postfach 86 06 49
D-8000 München 86(DE)

(54) Measurement of electrochemical potential in low electrical conductivity environments.

(57) An apparatus for monitoring the electrochemical potential of a metallic structure comprising the metallic structure to be monitored and a reference electrode connected to one another by at least one connector made of a polymer with ion exchange characteristics for reliable, long-term monitoring for 10 to 20 years.

EP 0 382 196 A2

## STATE OF THE ART

All the metallic structures for industrial or civil use (e.g. oil pipelines, gas pipelines, platforms for drilling of gas or oil fields in soil or off-shore, foundations of various kind, reinforcement bars of reinforced concrete constructions etc.) are exposed during their useful life to contact with the surrounding environment. Surrounding environment may mean the atmosphere with pollution substances and relevant condensates, seawater and soil. All three cases are characterized by the presence of water in condensate form and oxygen, which cause a corrosive attack to carbon steel, the structural material of more general use. In the presence of substances such as salts (in particular chlorides) and acids (e.g. sulfurous anhydride and nitrogen oxide in the particular case of the atmosphere), the corrosive attack intensifies with consequent substantial reduction of the life of the captioned structure.

A qualitative indication of the severity of the corrosive process is given by the electrochemical potential which characterizes at every moment the surface of the metal exposed to the ambient as above defined. The measurement of the electrochemical potential is therefore extremely important either for a diagnosis of principle of the state of preservation, both for old structures characterized by a certain operating life, or for structures of new construction for which it is necessary to estimate, even in approximate form, the foreseeable rate of degradation. The same measurement is also of great use to establish the effectiveness of protection systems (e.g. galvan zation, painting, cathodic protection based on sacrificial anodes or impressed current).

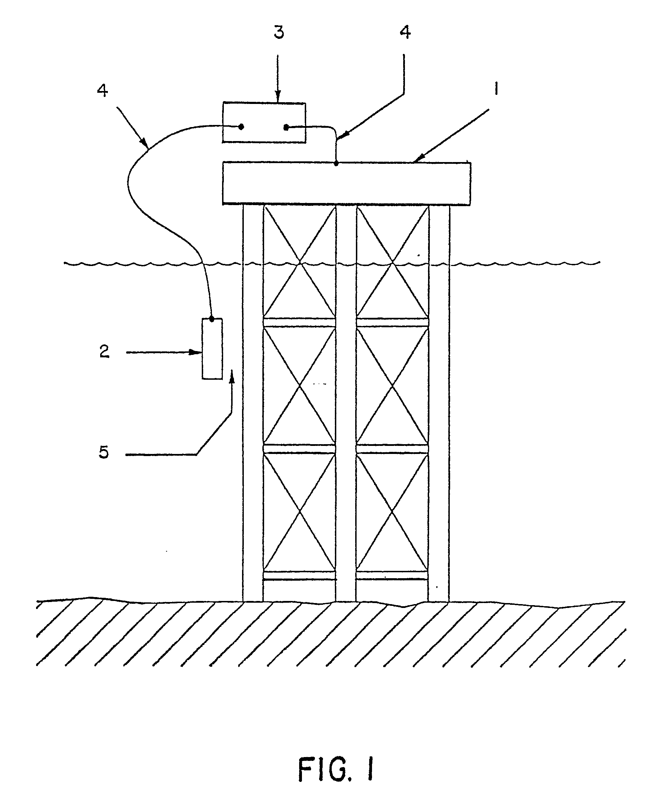

The prior art method (L. Lazzari, P. Pedeferri, Protezione Catodica, Ed. CLUP, Milan, 1981) to effect the measurement is shown in Figure 1 for the particular case of a structure immersed in sea water (e.g. off-shore drilling platform). The figure illustrates a metallic structure 1, a reference electrode 2 positioned near the immersed surface of the structure, a voltmeter 3 at high input impedance, cables 4 connecting the voltmeter to the structure and the reference electrode. The electric voltage measured with the voltmeter ($\Delta E$) is given by the difference among the electrochemical potentials of the structure (Est) and of the reference electrode (Eref):

$E = Est - Eref$    (A) If the electrochemical potential of the reference electrode is known and it is scarcely dependent upon the temperature and constant with time, the value of the electrochemical potential of the structure, Est is quickly drawn from equation (A).

Of the two characteristics of the reference electrode, known potential and constant potential, this latter one is the really necessary one. Actually all the values of Est, instead of being given on an absolute scale, can be given in a relative scale where the conventional zero is constituted by the value of the potential of the reference electrode. Provided that the potential of the reference electrode does not change, the values in relative scale of Est can be compared over time and therefore they will give some precise information about the progression of the corrosive attack (increasing, decreasing, stationary).

The reference electrodes, which are commercially available, are fully described by Ives et al in the book "Reference Electrodes Theory and Practice". Academic Press., N.Y. 1961. Briefly, reference electrodes are made of a small metal bar immersed into an aqueous solution containing a specified quantity of a soluble salt of the mentioned metal, e.g. metallic copper and an aqueous solution of copper sulfate, or alternatively in an aqueous solution saturated with a slightly soluble salt of the metal and containing a certain quantity of a soluble salt having the anion in common with the scarcely soluble salt of the metal (e.g. silver and an aqueous solution of potassium chloride saturated with silver chloride which is slightly soluble).

The assembly, metal and solution, is contained in a vessel made of an electrically insulating material (e.g. glass, plastic) having an open end provided with a porous separator which permits establishment of an electrical contact between the internal solution of the vessel and the external liquid environment (e.g. sea water,but also soil, which has to be seen as a particulate material soaked with water containing various salts) but at the same time it prevents any free mixing. Actually, equation (A) is a simplified form of the general equation (B) reported hereinafter:

$E = I.RV = Est - Eref + I.RM + I.RE + ES$    (B) wherein E is the measured voltage, I is the electric current which flows in the circuit comprising the structure, the reference electrode, the connection cables and the sea water volume included between the structure and the reference electrode (5 in Fig. 1), RV is the input impedance of the voltmeter, Est and Eref are the electrochemical potentials of the structure and of the reference electrode, RM is the ohmic resistance of the metallic part of the electric circuit (substantially the cables and the connection terminals). RE is the ohmic resistance of the electrolytic part of the electric circuit (substantially the volume of the liquid interposed between reference electrode and structure, 5 in Fig. 1) and ES is the electric gradient existing in the volume of the liquid interposed between reference electrode and structure and it is generated by electric currents external to said circuit (e.g. impressed

2

currents for cathodic protection).

Modern electronic voltmeters are characterized by high input impedances, equal to 100 Megaohms at least: there follows that the current I flowing in the system is extremely small, on the order of some nanoamperes, as the measured voltages are normally lower than 2 Volts, typically on the order of 1 Volt. As RM can be considerably reduced, e.g. to fractions of ohm, by means of suitable sizing of the cable section and adequate maintainence of the connection terminals, the I.RM in equation (B) is certainly negligible. The resistance RE is mainly a function of both the distance between the reference electrode and structure and the electrical conductivity of electrolyte (in case of Fig. 1, sea water) which occupies the volume comprised between reference electrode and structure.

This means that RE becomes sufficiently small and therefore I.RE is also negligible in equation (B) when the electrolytic conductivity as above mentioned is high (typical case of sea water) or when the distance between the reference electrode and structure is very small.

Therefore, in the case of sea water, relatively great distances between the reference electrode and structure are tolerable. Only when external currents (generated by cathodic protection systems) are present, this distance must be minimized to reduce the importance of ES in equation (B). Other environments, for instance soils or reinforced concrete, are characterized by a rather low electrical con ductivity, particularly under low humidity conditions. In these cases, the metallic structure potential can be correctly measured only if the distance between the reference electrode and structure is very small.

In the laboratory, using small size samples buried in vessels filled with soil or concrete to simulate the working conditions of the real structures, the reference electrode can be positioned so that its terminal part provided with the porous separator, as previously said, is in the immediate proximity, if not in contact, with the metallic surface. In case of difficulties due to the geometry of the sample structure, a so-called salt bridge can be used which is made of a small tube of suitable diameter, length and form, filled with a concentrated electrolytic solution. The bridge salt, having one of its extremities of of quite reduced section positioned in the immediate proximity of the metallic surface, establishes a highly conductive connection between the metallic surface itself and the reference electrode that can be positioned even at a considerable distance (e . g. one meter or more). Furthermore, the salt bridge prevents any contamination of the reference electrode due to chemical species which, present in the soil or concrete, are able to diffuse across the porous separator. In some cases, these contamination mechanisms cause a sliding of the potential of the reference electrode which makes the measurement completely untrustful.

On the other hand, the salt bridges are affected by a series of problems such as high risk of damage due to the intrinsic mechanical weakness, tendency of the concentrated electrolyte contained inside the salt bridge to dilute because of water diffusion during periods of rain (raising of the water-bearing strata, enlarging of the pores of the concrete) or, on the contrary, to dry out because of water leakage in periods of low or very low humidity. Therefore, it is clear why salt bridges able to remain effective for long periods (e.g. 10-20 years), as required by the necessity of recording the long-term behaviour of the potential, are not now commercially available.

Other problems of salt bridges for long-term monitoring are possible contamination of the surface of the metallic structure in case of concentrated electrolyte leakages. These phenomena are able to change the electrochemical potential of the structure right in the measurement area which cannot then be considered anymore as representative of the conditions of the structure surface. Also introduction of a measurement error connected to the electric resistance typical of the salt bridge, particularly if it is long, such electric resistance adding an I.RP element to the I.RE term in equation (B). The lower is the length and the higher is the conductivity of the concentrated electrolyte, the smaller is this error.

The above mentioned drawbacks are particularly important in the case of reinforced concrete, as discussed in detail in many technical publications. Particularly significative is "Practical Potential Monitoring in Concrete", K.G.C. Berkley, S. Pathmanabah, U.K. Corrosion '87, October 26-28, Brighton (U.K.). The least that can be said about the above mentioned procedures is that they have been developed in the laboratory and they are intrinsically complicated, absolutely in contrast with the simplicity, strength, reliability qualities requested by measurement procedures to be effected in the field.

Notwithstanding the above mentioned difficulties, recent recommendations of technical authorities (e.g. NACE, National Association of Corrosion Engineers, U.S.A.) emphasize the need of accurate recording of the electrochemical potential of the metallic structures, the state of preservation of which is to be known also in qualitative terms. This necessity is critical in the case of reinforced concrete, but it is also of primary importance in the case of the metallic structures in contact with other kinds of environments such as soil, natural waters, sea water, atmosphere.

3

## OBJECTS OF THE INVENTION

It is an object of the invention to provide a novel apparatus and method of monitoring the electrochemical structure to determine the degree of corrosion of the metallic structure.

It is another object of the invention to provide novel metallic structures where electrochemical potential can be monitored over a prolonged period of time to determine its degree of corrosion, especially steel reinforced concrete structures.

These and other objects of the invention will become obvious from the following detailed description.

## THE INVENTION

The novel apparatus of the invention for monitoring the electrochemical potential of a metallic structure comprises the metallic structure to be monitored and a reference electrode connected to one another by at least one connector made of a polymer with ion exchange characteristics for reliable, long-term monitoring for 10 to 20 years.

A preferred method of the invention comprises the interposition between the metallic structure to be monitored and a reference electrode a connection element which is flexible, has linear development, is provided with electrical conductivity, and is made of at least one strip, tube or strand of polymeric material with ion exchange characteristics. preferably of cationic type, in a plastic sheath to provide protection and insulation from possible electrical interferences of the environ ment. The assembly, sheath/strips or tubes or strands is fixed to one end in the immediate proximity or even in contact with the surface of the metallic structure and it is provided at the other end with a terminal element shaped like a plastic vessel containing a porous filler soaked with electrolyte. The reference electrode is pressed either permanently or at the time of the measurement against such filler.

The apparatus of the invention allows for overcoming measurement problems of the electrochemical potential of metallic structures in contact with concrete (reinforcement bars), soil (e.g. foundations, gas and oil-pipelines), natural waters and sea water (e.g. off-shore platforms), and with the atmosphere, such problems being typical of the prior art. Particularly, the invention is directed to make the measurement of the electrochemical potential with the necessary reference electrode positioned externally the environment of the metallic structure (concrete, soil, etc.), in an easily accessible position so that a continuous monitoring of the state of conservation of the electrode itself and its ready substitution are easily carried out. The Invention also avoids accidental contamination of the reference electrode and of the metallic structure to be kept under control and ensuring stability and reproducibility of the measurement also for very long periods (10-20 years).

The objectives are attained by the use of the polymeric material with ion exchange characteristics in the form of linearly developed elements (strips , tubes, strands), which are inserted between the metallic structure to be monitored and the reference electrode. These elements are characterized by sufficient electrical conductivity and ensure a substantially non-resistive connection between structure and reference electrode. The polymeric materials with ion exchange characteristics (later defined as ion exchange membranes) are made of a polymeric backbone (e.g. polystyrene, polyacrylate, polytetrafluoroethylene) on which ionic groups such as sulfonic groups ($SO_3-$), phosphonic groups ($PO_3H-$) amine groups ($NH_3+$), substituted amine groups ($NR_3+$) are fixed at pre-established distances.

The presence of the mentioned groups and the relevant counter-ions involves also the presence of water, either as ion hydration water or as capillary water inside the micropores wherein the ion population ensures a certain degree of hydrophilicity. The ion exchange membranes can be depicted as a support provided with intercommunicating micropores with molecular size dimensions, said micropores being occupied by a still liquid provided with electrical conductivity. The electrical conductivity of the ion-exchange membrane is a function of the nature and of the number of ion groups fixed on the polymeric backbone, of the relevant counter ions and of the quantity of water contained in the polymer. In addition, in the specific case of the present invention, it depends also on the geometry of the linearly used developed elements, particularly length, width (strips) or diameter (tubes) and thickness.

The fact that the ion exchange membrane must be effective for very long periods (10-20 years) involves a considerable inertness with respect to all the chemical and biological agents which can be present in the environment (e.g. oxygen, mineral and organic acidity, micro-organisms). For this reason, the ion exchange membranes of cationic type having negative groups fixed on the polymeric backbone and cations as the counter-ions are preferred to similar ion exchange membrane of anionic type (positive groups, e.g. aminic, fixed on the polymeric backbone and anions as the counter-ions). Furthermore, among cationic type membranes, the preferred are those provided with fixed sulfonic groups ($SO_3-$) and particularly those having polytetrafluoroethylene as the polymeric backbone, characterized in addition by high flexibility and low tendency to embrittlement caused by aging.

Cation exchange membranes of the sulfonic type are commercialized by Du Pont de Nemours, U.S.A. and Asahi Glass (Japan) and they have been developed up to the pre-commercial state by other companies. A typically suitable membrane is presented by Nafion 117 sold by Dupont as flat sheets of various thickness (from some tens of microns to some tenths of millimeter) and also as tubes with a maximum diameter of some millimeters. The counter-ion present in the membrane, normally sodium, can be easily substituted simply by boiling, i.e. for an hour, in distilled water or 0.5 molar sulfuric acid (counter-ion : H +), or lithium chloride (counter-ion Li +), calcium chloride (counter-ion : Ca + +), etc.

Generally, all the membrane forms are suitable for the object of the present invention, but more commonly the acid and sodium forms are utilized, essentially to avoid resort to chemicals not always easily found in the places where the present device may be installed (e.g. lithium chloride). Of course, even when the membrane is used as above mentioned and it has the maximum electric conductivity, a certain error in the measurements (I.RP) is unavoidable. To keep these errors within tolerable limits, for example on the order of millivolts, it is necessary to optimize the geometry of the membrane elements. Particularly, it is necessary to define case by case the best relation between actual conductive cross-section and length of the element. The cross-section can be regulated within rather large limits using strips cut by the membrane sheets in suitable width or by a suitable number of small membrane tubes.

The aim of the above is to keep the value of the electric resistance (reciprocal electric conductivity) of the linear elements of the membrane to a level substantially lower than the value of input impedance of the voltmeter (i.e. at least 3 orders of magnitude). It should be remembered that the electric resistance of the linear membrane (RM) elements is defined by the following equation:

$$ RM = \frac{1}{A} \cdot \frac{L}{S} \qquad (C) $$

Wherein A is the membrane conductivity (ohm-1 .cm-1), L is the linear element length and S is its section.

From equation (C), it can be inferred that with a value of = 0.2 ohm-1.cm-1 typical of the acid form membrane, a value RM = 100.000 ohm (three orders of magnitude lower than the one of the input impedance of an electronic voltmeter of medium quality) is obtained with a length of the linear element of 1 m. when the useful conductive section is equal to 5 mm². This section is obtained with strips of thickness 0.1 mm having a width of 50 mm.

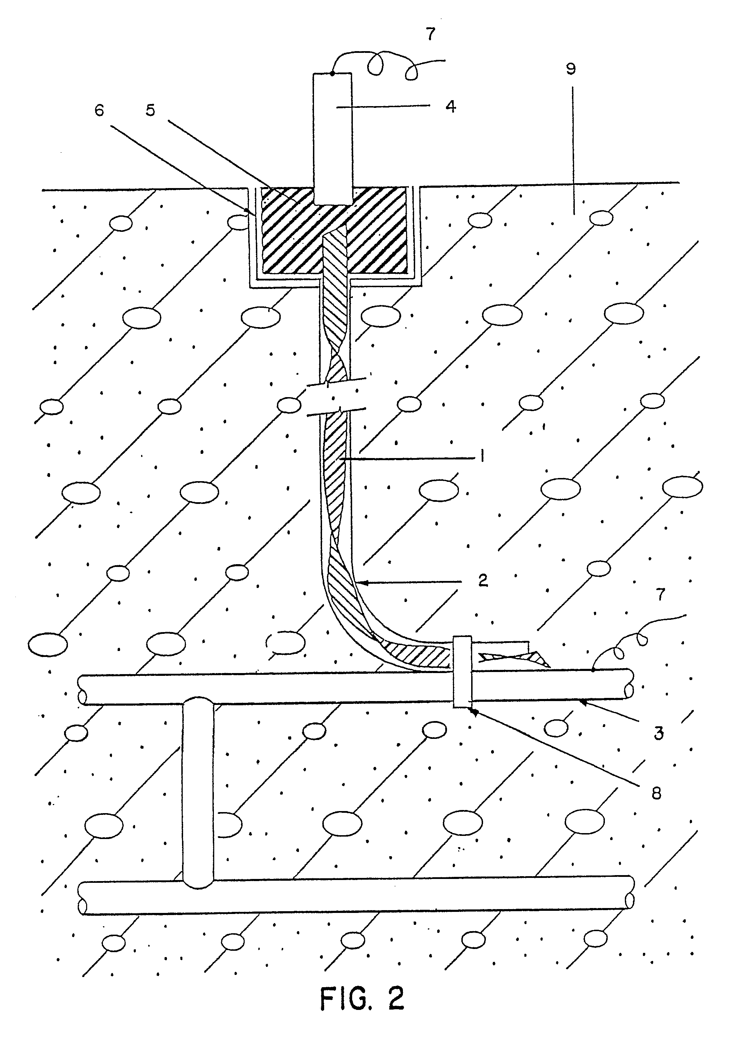

Fig. 2 illustrates a scheme of a typical application of the present invention to measure the electrochemical potential of steel reinforcement in concrete. The numerals indicate (1) is a strip of ion exchange membrane; (2) is a sheath of plastic material (PVC, PP, PE, PTFE), which provides protection and electric insulation from possible interferences of the environment; (3) is a steel reinforcement comprising, for instance, rods welded one to each other, to be maintained under control as concerns the electrochemical potential; (4) is a reference electrode positioned external to the reinforced concrete structure, easy to examine and to substitute; (5) is an electrolyte, electrically connecting the reference electrode and the membrane strip, advantageously absorbed in a sponge of synthetic expanded material.

(6) is a terminal element consisting of a plastic vessel connected to the pipe (2) (e.g. by soldering) to be filled with the sponge soaked with an electrolyte; (7) is a cable for connecting the electronic voltmeter (not shown in figure), to respectively the reference electrode and the steel reinforcement; (8) is a clamping band of the sheath (2) containing the membrane strip (1) to the steel reinforcement (3) and (9) is the concrete structure.

The illustrated arrangement maybe subjected to many modifications. For instance, the terminal part of the pipe (2) fixed to the steel reinforcement may be perforated. Furthermore, the end of the membrane strip may be positioned in direct contact with the steel surface and this latter arrangement becomes necessary when the structures to be monitored are exposed to the corrosive action of the atmosphere.

The arrangement of Fig. 2, with any modifications obvious for those skilled in the art, is easily adaptable to other situations of practical interest, e.g. metal structures in contact with soil, natural waters or sea water. Of all the mentioned applications, the most critical are those in the soil and especially those in concrete, wherein prior art devices for the measurement of the electrochemical potential (reference electrode buried in the soil or in the concrete, salt bridges) are far from being reliable and long-lasting, as required.

The present invention completely overcomes these problems because the reference electrodes are externally positioned and therefore they are free from possible pollution. Moreover, they are easily inspected and, if necessary, easily replaced. Moreover, the present invention avoids the use of fixed reference electrodes at all. In this case, the vessel (6) of Fig. 2 which contains the porous material soaked with electrolyte, (e.g. an expanded plastic sponge) is provided with a tight sealing lid (not shown in fig. 2). At the moment of the measurement, the lid is removed and if necessary, the porous filling is humidified and a portable reference electrode carefully calibrated, is pressed against the porous material itself. The strip or small tubes of ion exchange membrane together with the protective sheath constitute a flexible, mechanically resistat assembly, also in the case of high energy impacts. As liquids are not present, the problems connected to drying out, typical of the salt bridges known in the art, are eliminated.

As concerns membrane dehydration which could cause unbearable increases of resistance, this inconvenience quite surprisingly has been never noted during the many experimental installations, even during extended low humidity periods connected with high environmental temperature. It Is absolutely unlikely that the sheath and the lid of the vessel of the porous material soaked with electrolyte would be able to prevent water vapor to diffuse away. Actually, the sealing action of the lid cannot be perfect and the sheath is open at its ends and is made of plastic materials which are certainly permeable. It is more likely that the unexpected good performances of the membrane in conditions favorable to drying out is due to the fact that a substantial portion of water contained in the membrane is bound as ion hydration water by the fixed ion groups and relevant counter-ions.

In the following examples, there are described several preferred embodiments to illustrate the invention. However, it should be understood that the invention is not intended to be limited to the specific embodiments.

## EXAMPLE 1

As a laboratory test, a vessel having a 5 liter volume was two thirds filled with synthetic sea water, obtained according to prior art teachings. The sea water whose upper surface was in contact with the atmosphere was kept stirred with a low speed magnetic stirrer. A sample of small commercial carbon steel plate having a rectangular shape with dimensions of 5 x 10 cm and a thickness of 3 mm was immersed in the liquid by hanging from a suitable rigid support. The electrochemical potential at ambient temperature was measured with a silver chloride reference electrode positioned in the immediate surroundings of the steel surface. After several hours of equilibration, the potential stabilized between -516 and -520 millivolt, a clear indication of corrosive attack in action.

The measurement was therefore repeated using a strip of Nafion 117 membrane in the sodium form having 56 cm length and 2.5 cm width. A membrane and was firmly fixed in immediate contact with the steel surface, while the other end was immersed in a second small vessel, approximate volume: 0.1 liters, filled with synthetic sea water. The silver chloride reference electrode used in the measurement mentioned above was introduced into this second vessel. In this arrangement, only a small portion of the membrane was in contact with the liquid phase in the two vessels. Most of the strip which electrically connected the two vessels was exposed to the atmosphere. The potential, recorded with this second arrangement, was approximately between -517 and -528 millivolt, in very good agreement with the data of the first measurement which is considered representative of the prior art.

## EXAMPLE 2

Strips of various width and with a length between 25 and 300 cm were cut from a Nafion (R)117 membrane sheet in sodium form and the strips were inserted in polyethylene tube sheaths of the same length. One end of each sample was fixed at various points of the steel reinforcement of a concrete structure under construction, the other end being connected to a measurement station comprising a plastic vessel containing a spongy material wetted with an electrolyte. At the end of the construction of the concrete structure, the physical arrangement of various samples resulted in the scheme of Fig. 2 with the sheaths containing the membrane strips completely buried in the concrete and with the vessels having their rim at the very level of the concrete external surface.

After the necessary aging of the concrete, the potential of the steel reinforcement was recorded using a reference electrode of the copper/copper sulfate type pressed against the spongy material wetted with an electrolyte. The values ranged from -150 to -200 millivolts as a demonstration that the steel was passivated and corrosion was negligible . At some points of the structure which had been contacted intentionally with chloride-bearing water, the recorded potentials were between -380 and -450 millivolts which showed that the known action of depassivation of chlorides had started a corrosive process.

The above mentioned measurements were doubled using procedures known in the prior art consisting of drilling holes in the concrete, wherein the reference electrodes were positioned and cemented. The new data doubled that obtained with the membrane strips assemblies of the present invention with a maximum deviation of 15 millivolts. It was noted also that the measurements carried out with the electronic voltmeter at various positions where the membrane strips had been installed, did not present any problems, even in low relative humidity periods and high ambient temperature. Potential data has been recorded without problems over two years and no maintenance intervention has been necessary.

## EXAMPLE 3

A zinc-coated steel structure installed off-shore was monitored using a Nafion 117, membrane (sodium form) having one of the two ends fixed to the surface of the structure and the other one soaked inserted into a small vessel containing synthetic sea water. The main part of the strip between the structure and the vessel remained in free contact with the atmosphere for about 3 meters length. The potentials measured with a silver chloride reference electrode ranged between -1048 and -1070 millivolts, as expected for a still undamaged zinc surface in contact with a very thin film of salty solution, formed as a consequence of condensation of atmospheric humidity on microcrystals of salt brought by the wind and deposited on the structure. The measured values were comparable to the well known similar ones of massive zinc-immersed in sea water and equal to -1055 millivolts. The comparison clearly showed the reliability of the present method.

Various modifications of the invention may be made without departing from the spirit or scope thereof.

## Claims

1. An apparatus for monitoring the electrochemical potential of a metallic structure comprising the metallic structure to be monitored and a reference electrode connected to one another by at least one connector made of a polymer with ion exchange characteristics.

2. The apparatus of claim 1 wherein the metallic structure is electrically grounded.

3. The apparatus of claim 1 wherein the metallic structure is steel rebars of a reinforced concrete structure.

4. The apparatus of claim 1 wherein the polymer has cationic exchange characteristics.

5. The apparatus of claim 4 wherein the polymer contains fixed sulfonic ionic groups.

6. The apparatus of claim 5 wherein the counter ions of the polymer are selected from the group consisting of hydrogen, lithium, sodium, potassium, magnesium and calcium.

7. The apparatus of claim 1 wherein the polymer is an assembly of at least one strip, tube or strand of polymeric material inside a tubular protective and electrically insulating plastic sheath of the same length.

8. The apparatus of claim 7 wherein the assembly is flexible and one end is in direct contact or immediately adjacent to the surface of the metallic element and the other end is provided with a terminal element for connection to the terminal electrode.

9. The apparatus of claim 8 wherein the terminal element is a plastic vessel filled with a porous material wetted with electrolyte and closed with a water-tight lid.

10. A metallic structure whose electrical potential can be monitored over a prolonged time comprising the metallic structure to be monitored and a reference electrode connected to one another by at least one connector made of a polymer with ion exchange characteristics.

11. The structure of claim 10 wherein the metallic structure is electrically grounded.

12. The structure of claim 1 wherein the metallic structure is steel rebars of a reinforced concrete structure.

13. The structure of claim 10 wherein the polymer has cationic exchange characteristics.

14. The structure of claim 13 wherein the polymer contains fixed sulfonic ionic groups.

15. The structure of claim 14 wherein the counter ions of the polymer are selected from the group consisting of hydrogen, lithium, sodium, potassium, magnesium and calcium.

16. The structure of claim 10 wherein the polymer is an assembly of at least one strip, tube or strand of polymeric material inside a tubular protective and electrically insulating plastic sheath of the same length.

17. The structure of claim 16 wherein the assembly is flexible and one end is in direct contact or immediately adjacent to the surface of the metallic element and the other end is provided with a terminal element for connection to the terminal electrode.

18. The structure of claim 17 wherein the terminal element is a plastic vessel filled with a porous material wetted with electrolyte and closed with a water-tight lid.

19. A method for monitoring the electrochemical potential of a metallic structure comprising measuring the electrical voltage between the metallic structure to be monitored and a reference electrode connected to one another by at least one connector made of a polymer with ion exchange characteristics.

20. The method of claim 19 wherein the metallic structure is a series of steel rebars in a reinforced concrete structure.

21. The method of claim 20 wherein the concrete structure is a bridge.

22. The method of claim 20 wherein the concrete structure is a roadway.

FIG. I

FIG. 2